(19) Europäisches Patentamt
European Patent Office
Office européen des brevets

(11) EP 4 056 617 A1

# (12) EUROPEAN PATENT APPLICATION

(43) Date of publication:
**14.09.2022 Bulletin 2022/37**

(21) Application number: **21161312.0**

(22) Date of filing: **08.03.2021**

(51) International Patent Classification (IPC):
***C08G 18/38*** (2006.01) ***C08G 18/72*** (2006.01)
***C08G 18/79*** (2006.01) ***C09D 175/12*** (2006.01)

(52) Cooperative Patent Classification (CPC):
**C08G 18/3821; C08G 18/3853; C08G 18/3865; C08G 18/3876; C08G 18/72; C08G 18/797; C09D 175/12**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude 4825**
**51365 Leverkusen (DE)**

## (54) POLYASPARTIC ACID ESTER-CONTAINING COMPOSITION

(57) The invention relates to a polyaspartic acid ester-containing composition, a two-component coating composition containing said composition, a coating method and use of the coating composition, and a product obtained by applying the coating composition. The polyaspartic acid ester-containing composition comprises a. a Polyaspartic acid ester; b. a thiol with an active hydrogen group; and c. optionally an antioxidant in an amount of not more than 3% by weight, relative to the total weight of the composition; wherein the molar ratio of mercapto groups of the thiol of component b) to amino groups of the polyaspartic acid ester of component a) is of 0.060-0.720. The composition of the present invention has high color stability and is not prone to yellowing.

EP 4 056 617 A1

## Description

### Technical Field

The invention relates to a polyaspartic acid ester-containing composition, a two-component coating composition containing the composition, a coating method and application of the coating composition, and a product obtained by applying the coating composition.

### Prior Art

Polyaspartic acid ester-containing coating compositions and elastomers can be widely used in a variety of substrates to protect them and to improve their performance. Nowadays, polyaspartic acid ester-containing coating compositions are widely used in industrial coating compositions due to their excellent corrosion resistance, wear resistance, chemical resistance and weather resistance. However, the general disadvantage of polyaspartic acid ester-based coating compositions and elastomers is that polyaspartic acid ester has an obvious yellowing tendency during storage, which is undesirable during formulation design, storage and use.
In the prior art, sterically hindered phenol antioxidants such as 3,5-di-tert-butyl-4-hydroxytoluene, and organic phosphite antioxidants such as trinonylphenyl phosphite, triphenyl phosphite, diphenyl isodecyl phosphite, diphenyl isooctyl phosphite, tridodecyl phophite and tris(2,4-di-tert-butyl-phenyl) phosphite are added to increase the color stability of polyaspartic acid ester-containing coating compositions or elastomers.
CN104449303B discloses that at least two antioxidants (TPP, BHT, TNPP, TEPA, Irganox1135 and triisodecyl phosphite) are used together to significantly improve the color stability of polyaspartic acid ester-containing coating compositions and the transparent coatings formed therefrom.
US2002132965A discloses that a thiol can be used as a co-reactant in the reaction of a primary amine and diethyl maleate for the synthesis of polyaspartic acid esters to increase the conversion in the synthesis of polyaspartic acid esters.
US2010311890A discloses that the thiol contained in low modulus polyaspartic acid ester-containing coating compositions can be used as a component that provides active hydrogen for other reaction resins (including polyethers, polyols, thiol ethers, polycarbonates and polyesters) in the reaction to generate polyurea coating compositions.
It is desired to develop a polyaspartic acid ester-containing coating composition with high color stability and low yellowing tendency.

### Summary of the invention

The objects of the present invention are to provide a polyaspartic acid ester-containing composition, a two-component coating composition containing the composition, a coating method and use of the coating composition, and a product obtained by applying the coating composition.
The polyaspartic acid ester-containing composition according to the present invention comprises:

a. a polyaspartic acid ester;
b. a thiol with an active hydrogen group; and
c. optionally an antioxidant in an amount of not more than 3% by weight, relative to the total weight of the composition;

wherein the molar ratio of mercapto groups of the thiol of component b) to amino groups of the polyaspartic acid ester of component a) is of 0.060-0.720.
According to an aspect of the present invention, a coating composition, an adhesive or a sealant comprising the polyaspartic acid ester-containing composition according to the present invention is provided .
According to another aspect of the present invention, a two-component coating composition comprising component A and component B is provided, wherein said component A is the polyaspartic acid ester-containing composition according to the present invention, and said component B is a crosslinking agent.
According to still another aspect of the present invention, use of the two-component coating composition according to the present invention for protecting a surface of a substrate or a coating on the surface of a substrate is provided .
According to yet another aspect of the present invention, a coating method comprising applying the two-component coating composition according to the present invention to a surface of a substrate and then curing and drying is provided.
According to yet another aspect of the present invention, a product comprising a substrate and a coating formed by applying the two-component coating composition of the present invention to the substrate and then curing and drying is provided.

According to yet another aspect of the present invention, a method for preparing the polyaspartic acid ester-containing composition according to the present invention is provided, which comprises mixing the polyaspartic acid ester of component a), the thiol with an active hydrogen group of component b) and optionally an antioxidant of component c) in any desired manner.

The thiol and optionally the antioxidant in the polyaspartic acid ester-containing composition of the present invention can effectively inhibit the yellowing of the composition, and thus the composition has high color stability. A coating composition comprising the composition of the present invention, especially a transparent coating composition, can still have color stability and show unobvious yellowing after being stored for 20 weeks at the temperature of 50°C.

**Embodiments**

The present invention provides a polyaspartic acid ester-containing composition comprising a. a polyaspartic acid ester; b. a thiol with an active hydrogen group; and c. optionally an antioxidant in an amount of not more than 3% by weight, relative to the total weight of the composition; wherein the molar ratio of mercapto groups of the thiol of component b) to amino groups of the polyaspartic acid ester of component a) is of 0.060-0.720. The present invention also provides a method for preparing the composition, a two-component coating composition comprising the composition, a coating method and use of the coating composition, and a product obtained by applying the coating composition.

The term "primary thiol" used herein refers to a thiol with a mercapto group attached to the primary position of the end group.

The term "thiol" used herein refers to an organic sulfur compound corresponding to the general formula R-SH, where R represents an alkyl group or other organic substituent, the sulfur atom being connected to a carbon atom.

The term "two-component coating composition" used herein refers to a coating composition comprising at least two components, which have to be stored in separate containers due to their reactivity with each other. When these two separate components are mixed and applied to a substrate, the reactive compounds in the two components react with each other to crosslink and form a cured coating.

The term "coating composition" used herein refers to a chemical composition that can be applied to a surface of an object by a variety of application processes to form a continuous solid coating with firm adhesion and certain strength.

The term "curing and drying" used herein refers to a process from a liquid state to a cured state of a coating composition.

The term "each independently" used herein means that the groups may be identical or different.

The term "organic group non-reactive toward isocyanate" used herein refers to an organic group that is inert to isocyanate groups at a temperature of 150°C or lower.

"Amino" herein refers to $-NR_2$, $-NHR$, $R-NH_2$, where R is an alkyl group.

<u>Polyaspartic acid ester-containing composition</u>

The polyaspartic acid ester-containing composition is preferably transparent.

The molar ratio of mercapto groups of the thiol of component b) to amino groups of the polyaspartic acid ester of component a) refers to the ratio of the mercapto group moles of the thiol of component b) to the amino group moles of the polyaspartic acid ester of component a).

The molar ratio of mercapto groups of the thiol of component b) to amino groups of the polyaspartic acid ester of component a) is preferably of 0.070-0.72, more preferably of 0.070-0.240, and most preferably of 0.070-0.200. The calculation method is as follows:

$$\text{Molar ratio of mercapto groups of the thiol of component b) to amino groups of the polyaspartic acid ester of component a)}$$
$$= \frac{\text{Mass of the thiol of component b) / mercapto equivalent of the thiol of component b)}}{\text{Mass of polyaspartic acid ester of component a) / amino equivalent of the polyaspartic acid ester of component a)}}$$

<u>Polyaspartic acid ester of component a)</u>

The amount of the polyaspartic acid ester is preferably of 40% to 95% by weight, relative to the total weight of the composition.

The polyaspartic acid ester has preferably the structure of formula I:

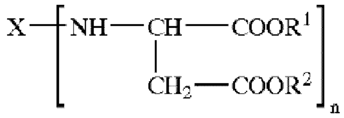

I ,

wherein X is an aliphatic residue,
$R^1$ and $R^2$ are each independently an organic group, which is non-reactive toward isocyanate groups under normal pressure and at a temperature of less than or equal to 100°C,
n is an integer of not less than 2.

The aliphatic residue is preferably one or more of linear alkyl residues, branched alkyl residues and cycloalkyl residues, and most preferably cycloalkyl residues.

The aliphatic residue herein is preferably derived from an alcohol compound which is preferably one or more of ethylene glycol, 1,2-dihydroxypropane, 1,4-dihydroxybutane, 1,6-dihydroxyhexane, 2,2,4-and/or 2,4,4-trimethyl-1,6-dihydroxyhexane, 1-hydroxy-3,3,5-trimethyl-5-hydroxymethylcyclohexane, 4,4'-dihydroxydicyclohexylmethane, 3,3'-dimethyl-4',4'-dihydroxydicyclohexylmethane, 1,5-dihydroxy-2-methylpentane, 1,1,1-trimethylolpropane and 2,2-bis(hydroxymethyl)-1,3-propanediol (pentaerythritol).

$R^1$ and $R^2$ are each independently preferably an alkyl residue having 1 to 10 carbon atoms, and most preferably one or more of methyl, ethyl and butyl.

n is preferably an integer of 2 to 4, and most preferably 2.

The polyaspartic acid ester is most preferably one or more of Desmophen NH 1420, Desmophen 1520, Desmophen 1220, Desmophen 2872, Desmophen 2850, Desmophen 1422 and Desmophen 1521, all available from Covestro Polymers (China) Co., Ltd.

The amino equivalent of the polyaspartic acid ester is preferably of 200-500.

The viscosity of the polyaspartic acid ester is preferably of 500 to 4000 mPa·s.

When n of the polyaspartic acid ester is 2, it is obtained by the reaction of a polyamine of the following formula and a maleate and/or fumarate of the following formula:

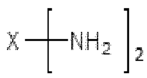 , 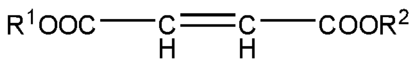 .

The polyamine is preferably one or more of ethylenediamine, 1,2-diaminopropane, 1,4-diaminobutane, 1,3-diaminopentane, 1,6-diaminohexane, 2,5-diamino-2,5-dimethylhexane, 2,2,4-trimethyl-1,6-diaminohexane, 2,4,4-trimethyl-1,6-diaminohexane, 1,11-diaminoundecane, 1,12-diaminododecane, 1,3-cyclohexanediamine, and 1,4-cyclohexanediamine, amino-3,3,5-trimethyl-5-aminomethyl-cyclohexane, 2,4-hexahydrotoluenediamine, 2,6-hexahydrotoluenediamine, 2,4'-diaminodicyclohexylmethane, 4,4'-diaminodicyclohexylmethane, 3,3'-dialkyl-4,4'-diamino-dicyclohexylmethane, 2,4,4'-triamino-5-methyldicyclohexylmethane, 2-methyl-1,5-pentanediamine, 1,3-xylenediamine and 1,4-xylenediamine, more preferably one or more of 1,4-diaminobutane, 1,6-diaminohexane, 2,2,4-trimethyl-1,6-diaminohexane, 2,4,4-trimethyl-1,6-diaminohexane, amino-3,3,5-trimethyl-5-aminomethylcyclohexane, 4,4'-diamino-dicyclohexylmethane, 3,3'-dialkyl-4,4'-diaminodicyclohexylmethane and 2-methyl-1,5-pentanediamine, and most preferably one or more of 2-methyl-1,5-pentanediamine, amino-3,3,5-tris methyl-5-aminomethylcyclohexane, 2,4'-diamino-dicyclohexylmethane, 4,4'-diamino-dicyclohexylmethane and 3,3'-dialkyl-4,4'-diaminodicyclohexylmethane.

The maleate and/or fumarate is preferably one or more of dimethyl maleate, diethyl maleate, dibutyl maleate, dimethyl fumarate, diethyl fumarate and dibutyl fumarate.

The reaction temperature is preferably of 0°C to 100°C.

The weight ratio of the maleate and/or fumarate to the polyamine is preferably 2:1.

The weight ratio of the olefinic double bonds of the maleate and/or fumarate to the primary amino groups of the polyamine is preferably 1:1.

The product obtained from the reaction is preferably purified by rectification.

The components of the reaction may or may not comprise a solvent, and preferably comprises a solvent.

The solvent is preferably one or more of methanol, ethanol, propanol and dioxane.

Thiol with an active hydrogen group of component b)

The amount of the thiol with an active hydrogen group of component b) is preferably of 3% by weight to 8% by weight, relative to the total weight of the composition.

The thiol of component b) has preferably an ether structure; is further preferably a primary thiol with an ether structure; and most preferably one or more of tris[2-(3-mercaptopropionyloxy)ethyl] isocyanurate, pentaerythritol tetra(3-mercaptopropionate), bis(2-mercaptoethyl) sulfide, 2,3-bis[(2-mercaptoethyl)thio]-1-propanethiol, trimethylolpropane tri(2-mercaptoacetate), and pentaerythritol tetra(mercaptoacetate).

Antioxidant of component c)

The amount of the antioxidant is preferably of not more than 2% by weight, relative to the total weight of the composition.

Most preferably, the composition does not comprise an antioxidant.

The antioxidant is preferably one or more of sterically hindered phenolic antioxidants and organic phosphite antioxidants; and most preferably one or more of triphenyl phosphite, trinonylphenyl phosphite, 3,5-di-tert-butyl-4-hydroxytoluene and isooctyl 3,5-di-tert-butyl-4-hydroxyphenylpropionate.

Two-component coating composition

The two-component coating composition is preferably transparent.

The component A and component B of the two-component coating composition are preferably stored separately, and mixed prior to use to give the two-component coating composition.

Crosslinking agent of component B

The crosslinking agent is preferably one or more of isocyanate group-containing compounds and carbodiimides.

Isocyanate groups of the isocyanate group-containing compounds of the present invention include free and/or potentially free isocyanate groups.

The potentially free isocyanate groups can be released by a method well known to those skilled in the art, such as heating.

The isocyanate group-containing compound is preferably liquid at room temperature or becomes liquid by adding an organic solvent.

The isocyanate group-containing compound may comprise a blocked isocyanate group. The blocked isocyanate group is blocked by reacting with a low molecular weight compound containing active hydrogen. The low molecular weight compound containing active hydrogen may be a aliphatic alcohol, an alicyclic alcohol, a dialkylamino alcohol, oxime, lactam, imide, hydroxyalkyl ester, malonate or acetoacetate.

The isocyanate group-containing compound may have hydrophilic groups.

The isocyanate group-containing compound is preferably one or more of aliphatic polyisocyanates, alicyclic polyisocyanates, araliphatic polyisocyanates and aromatic polyisocyanates, most preferably one or more of aliphatic polyisocyanates and alicyclic polyisocyanates.

The isocyanate group-containing compound may be a prepolymer or an adduct of diisocyanate, for example, a trimer of diisocyanate. The isocyanate group-containing compound may also be an isocyanurate, a biuret group-containing polyisocyanate, a urethane group-containing polyisocyanate, an allophanate group-containing polyisocyanate, an isocyanurate group- and allophanate group-containing polyisocyanate, a carbodiimide group-containing polyisocyanate, and a ureide group-containing polyisocyanate.

The equivalent ratio of the isocyanate groups of the isocyanate group-containing compound to the isocyanate-reactive groups of component A is preferably of 0.5:1-10:1.

The equivalent ratio of the N=C=N groups of the carbodiimide to the isocyanate-reactive groups of component A is preferably of 0.5:1-10:1.

Additive

The two-component coating composition may further comprise an additive. The additive is selected from one or more of pigments such as organic pigments, inorganic pigments, metallic pigments or pearlescent pigments, wetting agents, matting agents, defoamers, film formers, thickeners, elastic agents, catalysts, UV absorbers, and other additives that can be added to the two-component coating composition as well known to those skilled in the art.

The additive may be added in an amount which is well known to those skilled in the art.

The two-component coating composition may further comprise a solvent. The solvent may be one that can be added to the two-component coating composition as well known to those skilled in the art, most preferably one or more of n-butyl acetate, xylene and propylene glycol methyl ether acetate.
The solvent may be added in an amount which is well known to those skilled in the art.

Substrate

The substrate may be artificial stone, wood, artificial wood, marble, terrazzo, ceramic, felt, metal, plastic, rubber, concrete, composite board, paper, leather or glass, most preferably metal or glass.
The substrate may be pre-treated. The pre-treatment may be polishing or coating.

Application

The application may be a method well known to those skilled in the art, such as knife coating, brush coating, roller coating, spray coating or curtain coating.

Product

The product can be windows, mirrors, furniture, bicycles, cars, road signs, bridges, books or boxes, most preferably cars.

**Examples**

Unless defined otherwise, all technical and scientific terms used herein have the same meaning as commonly understood by those skilled in the art. When the definition of a term in this specification conflicts with the meanings commonly understood by those skilled in the art, the definition described herein shall prevail.
Unless indicated otherwise, all numbers expressing quantities of ingredients, reaction conditions and the like used in the specification and claims are to be understood as being modified by the wording "about". Accordingly, unless indicated to the contrary, the numerical parameters set forth herein are approximations that can vary depending upon the desired properties to be obtained.
The wording "and/or" used herein refers to one or all of the cited elements.
The wording "include" and "comprise" used herein cover the presence of the mentioned elements alone and the presence of other unmentioned elements in addition to the mentioned elements.
All percentages in the present invention are weight percentages, unless otherwise stated.
The analysis and measurement in the present invention are performed at $23\pm2$°C, unless otherwise stated.
The isocyanate group (NCO) content is determined by volume in accordance with DIN-EN ISO 11909. The measured data include free and potentially free NCO contents.
Color value (Hazen value) is measured by using Hazen tester of Hash LICO 690 equipment according to ASTMD1209 standard. When the measured Hazen values of the composition at the beginning, after 6 weeks of storage, after 8 weeks of storage, and after 15 weeks of storage are all less than 150, the color of the composition is considered to be stable and not prone to yellowing.

**Raw materials and agents**

Desmophen NH1520: polyaspartic acid ester having a solid content of 100% by weight with amino functionality of 2.0 and amino equivalent of 290, available from Covestro Co., Ltd., Germany.
TEMPIC: tris[2-(3-mercaptopropionyloxy)ethyl] isocyanurate, thiol, from Bruno Bock-DE. PETMP: pentaerythritol tetra(3-mercaptopropionate), thiol, from Bruno Bock-DE. GST: 2,3-bis[(2-mercaptoethyl)thio]-1-propanethiol, thiol, from Bruno Bock-DE. DMDS: bis(2-mercaptoethyl) sulfide, thiol, from Bruno Bock-DE.
TPP: Triphenyl phosphite, antioxidant, from Shanghai Macklin Biochemical Co., Ltd. BHT: 3,5-di-tert-butyl-4-hydroxytoluene, antioxidant, from Sigma-Aldrich (Shanghai). n-butyl acetate: solvent, from Shanghai Ling Feng Chemical reagent Co. Ltd.
Xylene: solvent, from Shanghai Ling Feng Chemical reagent Co. Ltd.
Propylene glycol methyl ether acetate: solvent, from Shanghai Macklin Biochemical Co., Ltd.
BYK-333: Surface active agent, from BYK
BYK-141: Defoamer, from BYK
BYK-358N: Wetting agent, from BYK

Table 1 shows the TEMPIC content, the initial color value and the color value after several weeks of storage at 50°C of the polyaspartic acid ester-containing compositions from Examples 1-2 and Comparative Examples 1-4.
Table 2 shows the PETMP content, the initial color value and the color value after several weeks of storage at 50°C of the polyaspartic acid ester-containing compositions from Examples 3-5 and Comparative Examples 1, 5 and 6.
Table 3 shows the GST content, the initial color value and the color value after several weeks of storage at 50°C of the polyaspartic acid ester-containing compositions from Examples 6-9 and Comparative Examples 1 and 7.
Table 4 shows the DMDS content, the initial color value and the color value after several weeks of storage at 50°C of the polyaspartic acid ester-containing compositions from Examples 10-14 and Comparative Example 1.
Table 5 shows the composition, the initial color value and the color value after several weeks of storage at 50°C of the polyaspartic acid ester-containing compositions from Examples 14-15 and Comparative Examples 1, and 8-9.
Table 6 shows the composition, the initial color value and the color value after several weeks of storage at 50°C of the polyaspartic acid ester-containing compositions from Examples 14 and 16 and Comparative Examples 1 and 10.

Preparation of curable transparent composition containing polyaspartic acid ester

According to the thiol and antioxidant and the contents thereof shown in Tables 1-6, 60 g of Desmophen NH1520, a thiol, an antioxidant and a solvent mixture (wherein the ratio of each component of the solvent mixture was n-butyl acetate: xylene: propylene glycol methyl ether acetate: BYK 358N: BYK 333: BYK 141 = 15: 15: 7: 0.08: 0.01: 0.03, and the amount of the solvent mixture in the composition was adjusted according to the amount of other components in the composition so that the weight of the composition was 100g) were put into a vessel, stirred and mixed to obtain 100g of the composition, in which the content of Desmophen NH1520 was 60% by weight.
The initial Hazen values in the table below refer to the Hazen values obtained by the color value test within 60 minutes after the the compositions have been prepared.
6 weeks, 8 weeks, 15 weeks and 20 weeks indicate respectively that the Hazen values were obtained by the color value test after the compositions have been prepared and stored at 50°C for 6 weeks, 8 weeks, 15 weeks and 20 weeks.

Table 1 polyaspartic acid ester-containing compositions of Examples 1 to 2 and Comparative Examples 1 to 4 and color values thereof

| Example / Comparative Example | Thiol in the composition | | | Color value of the composition (Hazen value) | | | | |
|---|---|---|---|---|---|---|---|---|
| | Thiol | Thiol /g | Molar ratio of mercapto groups of the thiol to amino groups of the polyaspartic acid ester | initial | 6 weeks | 8 weeks | 15 weeks | 20 weeks |
| Comparative Example 1 | - | | | 34 | 93 | 121 | 199 | 315 |
| Comparative Example 2 | TEMPIC | 1.67 | 0.0276 | 35 | 109 | 147 | 232 | 329 |
| Comparative Example 3 | TEMPIC | 2.50 | 0.0414 | 34 | 116 | 162 | 251 | 357 |
| Comparative Example 4 | TEMPIC | 3.33 | 0.0552 | 34 | 113 | 143 | 260 | 317 |
| Examples 1 | TEMPIC | 4.17 | 0.0690 | 34 | 72 | 87 | 148 | 209 |
| Examples 2 | TEMPIC | 5.00 | 0.0828 | 33 | 63 | 71 | 93 | 113 |

It can be seen from the comparation between Comparative Examples 1-4 with Examples 1-2 that the color value of the composition after being stored at 50°C for 15 weeks was less than 150, that is, the composition was color stable and not prone to yellowing, when the molar ratio of mercapto groups of the thiol TEMPIC to amino groups of the polyaspartic acid ester in the transparent composition containing polyaspartic acid ester was greater than 0.060.

Table 2 polyaspartic acid esters-containing compositions of Examples 3 to 5 and Comparative Examples 1, 5 to 6 and color values thereof

| Example / Comparative Example | Thiol in the composition | | | Color value of the composition (Hazen value) | | | | |
|---|---|---|---|---|---|---|---|---|
| | Thiol | Thiol /g | Molar ratio of mercapto groups of the thiol to amino groups of the polyaspartic acid ester | initial | 6 weeks | 8 weeks | 15 weeks | 20 weeks |
| Comparative Example 1 | - | | | 34 | 93 | 121 | 199 | 315 |
| Comparative Example 5 | PETMP | 1.67 | 0.0396 | 34 | 115 | 158 | 244 | 348 |
| Comparative Example 6 | PETMP | 2.50 | 0.0593 | 33 | 89 | 128 | 201 | 232 |
| Examples 3 | PETMP | 3.33 | 0.0791 | 33 | 59 | 73 | 94 | 122 |
| Examples 4 | PETMP | 4.17 | 0.0989 | 34 | 56 | 65 | 81 | 96 |
| Examples 5 | PETMP | 5.00 | 0.1187 | 34 | 51 | 61 | 72 | 85 |

It can be seen from the comparation between Comparative Examples 1, 5-6 with Examples 3-5 that the color value of the composition after being stored at 50°C for 15 weeks was less than 150, that is, the composition was color stable and not prone to yellowing and not prone to yellowing, when the molar ratio of mercapto groups of PETMP to amino groups of the polyaspartic acid ester in the transparent composition containing polyaspartic acid ester was greater than 0.060.

Table 3 polyaspartic acid ester-containing compositions of Examples 6 to 9 and Comparative Examples 1 and 7 and color values thereof

| Example / Comparative Example | Thiol in the composition | | | Color value of the composition (Hazen value) | | | | |
|---|---|---|---|---|---|---|---|---|
| | Thiol | Thiol /g | Molar ratio of mercapto groups of the thiol to amino groups of the polyaspartic acid ester | initial | 6 weeks | 8 weeks | 15 weeks | 20 weeks |
| Comparative Example 1 | - | | | 34 | 93 | 121 | 199 | 315 |
| Comparative Example 7 | GST | 1.67 | 0.0557 | 34 | 88 | 122 | 157 | 242 |
| Examples 6 | GST | 2.50 | 0.0835 | 33 | 50 | 69 | 80 | 116 |
| Examples 7 | GST | 3.33 | 0.1113 | 32 | 41 | 59 | 66 | 95 |
| Examples 8 | GST | 4.17 | 0.1392 | 32 | 37 | 56 | 59 | 86 |
| Examples 9 | GST | 5.00 | 0.1670 | 32 | 38 | 58 | 59 | 85 |

It can be seen from the comparation between Comparative Examples 1 and 7 with Examples 6-9 that the color value of the composition after being stored at 50°C for 15 weeks was less than 150, that is, the composition was color stable and not prone to yellowing, when the molar ratio of mercapto groups of GST to amino groups of the polyaspartic acid ester in the transparent composition containing polyaspartic acid ester was greater than 0.060.

Table 4 polyaspartic acid esters-containing compositions of Examples 10 to 14 and Comparative Example 1 and color values thereof

| Example / Comparative Example | Thiol in the composition | | | Color value of the composition (Hazen value) | | | | |
|---|---|---|---|---|---|---|---|---|
| | Thiol | Thiol /g | Molar ratio of mercapto groups of the thiol to amino groups of the polyaspartic acid ester | initial | 6 weeks | 8 weeks | 15 weeks | 20 weeks |
| Comparative Example 1 | - | | | 34 | 93 | 121 | 199 | 315 |
| Examples 10 | DMDS | 1.67 | 0.0626 | 33 | 62 | 79 | 137 | 208 |
| Examples 11 | DMDS | 2.50 | 0.0940 | 32 | 44 | 54 | 72 | 102 |
| Examples 12 | DMDS | 3.33 | 0.1253 | 32 | 39 | 48 | 60 | 85 |
| Examples 13 | DMDS | 4.17 | 0.1566 | 31 | 38 | 44 | 56 | 78 |
| Examples 14 | DMDS | 5.00 | 0.1879 | 32 | 39 | 48 | 49 | 71 |

It can be seen from Examples 10-14 that the color value of the composition after being stored at 50°C for 15 weeks was less than 150, that is, the composition was color stable and not prone to yellowing, when the molar ratio of mercapto groups of DMDS to amino groups of the polyaspartic acid ester in the transparent composition containing polyaspartic acid ester was greater than 0.060.

Table 5 polyaspartic acid ester-containing compositions of Examples 14 to 15 and Comparative Examples 1, 8 to 9 and color values thereof

| Example / Comparative Example | Thiol in the composition | | | Antioxidant in the composition | | | Color value of the composition (Hazen value) | | | | |
|---|---|---|---|---|---|---|---|---|---|---|---|
| | Thiol | Thiol /g | Molar ratio of mercapto groups of the thiol to amino groups of the polyaspartic acid ester | Antioxidant | Antioxidant /g | Moles of the antioxidant, relative to the total moles of the polyaspartic acid ester in the composition /(mol/mol) | initial | 6 weeks | 8 weeks | 15 weeks | 20 weeks |
| Comparative Example 1 | | - | | | - | | 34 | 93 | 121 | 199 | 315 |
| Comparative Example 8 | | - | | TPP | 5.00 | 0.0444 | 52 | 177 | 254 | 339 | 472 |
| Comparative Example 9 | DMDS | 1.67 | 0.0626 | TPP | 3.33 | 0.0296 | 38 | 154 | 222 | 298 | 422 |
| Examples 15 | DMDS | 3.33 | 0.1253 | TPP | 1.67 | 0.0148 | 36 | 47 | 64 | 71 | 111 |
| Examples 14 | DMDS | 5.00 | 0.1879 | | - | | 32 | 39 | 48 | 49 | 71 |

It can be seen from Comparative Examples 1 and 8 that the color value of the composition after being stored at 50°C for 15 weeks was much higher than 150, that is, the composition had poor color stability and was prone to yellowing, when the composition comprised no thiol. The 5% by weight of antioxidant in the composition of Comparative Example 8 could not improve the color stability of the composition.

It can be seen from Comparative Example 9 that the color value of the composition after being stored at 50°C for 15 weeks is much higher than 150, that is, the composition had poor color stability and was prone to yellowing, when the composition comprised a suitable amount of the thiol and 3.33% by weight of the antioxidant.

It can be seen from Examples 14-15 that the color value of the transparent composition containing polyaspartic acid ester after being stored at 50°C for 15 weeks was much less than 150, that is, the composition was color stable and not prone to yellowing, when the molar ratio of mercapto groups of DMDS to amino groups of the polyaspartic acid ester in the composition was greater than 0.060 and the antioxidant content of the composition was 1.67 % by weight and 0 % by weight.

Table 6 polyaspartic acid ester-containing compositions of Examples 14 and 16 and Comparative Examples 1 and 10 and color values thereof

| Example / Comparative Example | Thiol in the composition | | | Antioxidant in the composition | | | Color value of the composition (Hazen value) | | | | |
|---|---|---|---|---|---|---|---|---|---|---|---|
| | Thiol | Thiol /g | Molar ratio of mercapto groups of the thiol to amino groups of the polyaspartic acid ester | Antioxidant | Antioxidant /g | Moles of the antioxidant, relative to the total moles of polyaspartic acid ester of the composition / (mol/mol) | initial | 6 weeks | 8 weeks | 15 weeks | 20 weeks |
| Comparative Example 1 | - | | | - | | | 34 | 93 | 121 | 199 | 315 |
| Comparative Example 10 | - | | | BHT | 5.00 | 0.0658 | 36 | 96 | 137 | 214 | 330 |
| Examples 16 | DMDS | 3.33 | 0.1253 | BHT | 1.67 | 0.0439 | 34 | 42 | 68 | 86 | 123 |
| Examples 14 | DMDS | 5.00 | 0.1879 | - | | | 32 | 39 | 48 | 49 | 71 |

It can be seen from Comparative Examples 1 and 10 that the color value of the composition after being stored at 50°C for 15 weeks was much higher than 150, that is, the composition had poor color stability and was prone to yellowing, when the composition comprised no thiol. The 5% by weight of antioxidant in the composition of Comparative Example 10 could not improve the color stability of the composition.

It can be seen from Examples 14 and 16 that the color value of the transparent composition containing polyaspartic acid ester after being stored at 50°C for 15 weeks was much less than 150, that is, the composition was color stable and not prone to yellowing, when the molar ratio of mercapto groups of DMDS to amino groups of the polyaspartic acid ester in the composition was greater than 0.060 and the antioxidant content of the composition was 1.67 % by weight and 0 % by weight.

Those skilled in the art will readily understand that the present invention is not limited to the foregoing details, and can be implemented in other specific forms without departing from the spirit or main characteristics of the present invention. Therefore, the examples should be regarded as illustrative rather than restrictive from any point of view, so that the scope of the present invention is illustrated by the claims rather than the foregoing description. Therefore, any change shall be regarded as belonging to the present invention, as long as it falls into the meaning and scope of equivalents of the claims.

## Claims

**1.** A polyaspartic acid ester-containing composition, comprising:

a. a polyaspartic acid ester;
b. a thiol with an active hydrogen group; and
c. optionally an antioxidant in an amount of not more than 3% by weight, relative to the total weight of the composition;
wherein the molar ratio of mercapto groups of the thiol of component b) to amino groups of the polyaspartic acid ester of component a) is of 0.060-0.720.

**2.** Composition according to claim 1, wherein the molar ratio of mercapto groups of the thiol of component b) to amino groups of the polyaspartic acid ester of component a) is of 0.070-0.72, more preferably of 0.070-0.240, and most preferably of 0.070-0.200.

**3.** Composition according to claim 1 or 2, wherein the amount of the antioxidant is not more than 2% by weight, relative to the total weight of the composition; most preferably, the composition does not comprise an antioxidant.

**4.** Composition according to any one of claims 1-3, wherein the polyaspartic acid ester of component a) has the structure of formula I:

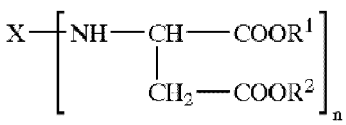

I ,

wherein X is an aliphatic residue,
$R^1$ and $R^2$ are each independently an organic group, which is non-reactive toward isocyanate groups under normal pressure and at a temperature of less than or equal to 100°C,
n is an integer of not less than 2.

**5.** Composition according to any one of claims 1-4, wherein the thiol of component b) has an ether structure; is further preferably a primary thiol with an ether structure; and is most preferably one or more of tris[2-(3-mercaptopropionyloxy)ethyl] isocyanurate, pentaerythritol tetra(3-mercaptopropionate), bis(2-mercaptoethyl) sulfide, 2,3-bis[(2-mercaptoethyl)thio]-1-propanethiol, trimethylolpropane tri(2-mercaptoacetate), and pentaerythritol tetra(mercaptoacetate).

**6.** Composition according to any one of claims 1-5, wherein the antioxidant is one or more of sterically hindered phenolic

antioxidants and organic phosphite antioxidants; and most preferably one or more of triphenyl phosphite, trinonylphenyl phosphite, 3,5-di-tert-butyl-4-hydroxytoluene and isooctyl 3,5-di-tert-butyl-4-hydroxyphenylpropionate.

**7.** A two-component coating composition comprising component A and component B, wherein said component A is the polyaspartic acid ester-containing composition according to any one of claims 1-6, and said component B is a crosslinking agent.

**8.** The two-component coating composition according to claim 7, wherein the crosslinking agent is one or more of isocyanate group-containing compounds and carbodiimides.

**9.** Use of the two-component coating composition according to claim 7 or 8 for protecting a surface of a substrate or a coating on the surface of a substrate.

**10.** A coating method comprising applying the two-component coating composition according to claim 7 or 8 to a surface of a substrate, and then curing and drying.

**11.** A product comprising a substrate and a coating formed by applying the two-component coating composition according to claim 7 or 8 to the substrate and then curing and drying.

Europäisches Patentamt
European Patent Office
Office européen des brevets

# EUROPEAN SEARCH REPORT

Application Number
EP 21 16 1312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 3 677 609 A1 (SIKA TECH AG [CH])<br>8 July 2020 (2020-07-08)<br>* reference example 8;<br>page 12; table 2 *<br>----- | 1-4,6-11<br>5 | INV.<br>C08G18/38<br>C08G18/72<br>C08G18/79<br>C09D175/12 |
| X | US 2017/327700 A1 (JEROMENOK JEKATERINA [DE] ET AL) 16 November 2017 (2017-11-16)<br>* page 11; example 1 *<br>* paragraph [0097] *<br>----- | 1-11 | |
| | | | TECHNICAL FIELDS SEARCHED (IPC) |
| | | | C08G<br>C09D |

The present search report has been drawn up for all claims

1

| Place of search | Date of completion of the search | Examiner |
|---|---|---|
| Munich | 6 August 2021 | Wohnhaas, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 21 16 1312

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2021

| Patent document cited in search report | Publication date | Patent family member(s) | Publication date |
|---|---|---|---|
| EP 3677609 A1 | 08-07-2020 | NONE | |
| US 2017327700 A1 | 16-11-2017 | BR 112017010292 A2 | 19-12-2017 |
| | | CA 2969144 A1 | 09-06-2016 |
| | | EP 3029129 A1 | 08-06-2016 |
| | | EP 3227405 A1 | 11-10-2017 |
| | | RU 2017123356 A | 11-01-2019 |
| | | US 2017327700 A1 | 16-11-2017 |
| | | WO 2016087400 A1 | 09-06-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 104449303 B
- US 2002132965 A
- US 2010311890 A